Europäisches Patentamt

European Patent Office

Office européen des brevets

(19)

(11) Veröffentlichungsnummer: **0 333 918**
**A2**

## (12) EUROPÄISCHE PATENTANMELDUNG

(21) Anmeldenummer: 88116300.0

(22) Anmeldetag: **11.10.88**

(51) Int. Cl.4: **H04M 1/66 , H04M 3/42 , H04Q 3/62**

(30) Priorität: **24.03.88 DE 3810305**

(43) Veröffentlichungstag der Anmeldung:
**27.09.89 Patentblatt 89/39**

(84) Benannte Vertragsstaaten:
**AT BE CH DE ES FR GB GR IT LI LU NL SE**

(71) Anmelder: **KRONE Aktiengesellschaft**
**Beeskowdamm 3-11**
**D-1000 Berlin 37(DE)**

(72) Erfinder: **Delakowitz, Bernd**
**Rebenweg 2**
**D-1000 Berlin 20(DE)**

(54) **Fernsprechanlage, insbesondere Nebenstellenanlage.**

(57) Bei einer Fernsprechanlage, insbesondere Fernsprechnebenanlage, soll eine unzulässige Benutzung der persönlichen Rufnummer bzw. Rufnummernkennung vermieden und das Löschen dieser Nummern bei einfacher Ausbildung der Fernsprechanlage vereinfacht werden.

Hierzu sieht die Erfindung vor, daß jedem Fernsprechapparat (4, 4') ein mit einem Codesignal als Rufnummernkennung ansteuerbarer Decoder (5) zugeordnet ist, der ein mittels eines steckbaren Bauelementes betätigbares Bedienlement aufweist, und daß ein als Steuereinrichtung dienender Multiplexer (2) beim Anwählen einer Rufnummer das deren Rufnummernkennung zugeordnete Codesignal an alle Decoder (5) aussendet, wobei der Decoder (5) ein Erkennungssignal zurücksendet, so daß die zugehörige Telefonanschlußleitung (3) definiert und zum Aufbau der gewünschten Verbindung einschaltbar ist.

EP 0 333 918 A2

## FERNSPRECHANLAGE, INSBESONDERE NEBENSTELLENANLAGE

Die Erfindunge bezieht sich auf eine Fernsprechanlage, insbesondere Nebenstellenanlage, gemäß dem Oberbegriff des Anspruches 1.

Aus der DE-OS 35 34 533 ist eine zentral gesteuerte Fernsprechnebenstellenanlage der gattungsgemäßen Art bekannt, bei welcher jedem Teilnehmer eine persönliche Rufnummer zugeordnet ist, welche über einen Teilnehmersatz jedem angeschlossenen Teilnehmerapparat zusätzlich zu dessen fest vorgegebener Rufnummer zugeordnet werden kann. Dabei sind einem Teilnehmerapparat auch mehrere persönliche Rufnummern zuordenbar. Nachteilig hierbei ist, daß keine Sicherheit gegen eine unbefugte Zuordnung der persönlichen Rufnummer zu einem beliebigen Teilnehmerapparat gegeben ist und daß ferner ein Löschen der einem bestimmten Teilnehmerapparat zusätzlich zugeordneten persönlichen Rufnummer erforderlich ist.

Der Erfindung liegt von daher die Aufgabe zugrunde, eine Fernsprechanlage, insbesondere Nebenstellenanlage, der gattungsgemäßen Art dahingehend zu verbessern, daß eine unzulässige Benutzung der persönlichen Rufnummer bzw. Rufnummernkennung vermieden ist und daß das Löschen vereinfacht ist, wobei eine möglichst einfache Ausbildung der Fernsprechanlage angestrebt wird.

Die Lösung dieser Aufgabe ergibt sich aus den kennzeichnenden Merkmalen des Anspruches 1. Durch Verwendung von den einzelnen Fersprechapparaten zugeordneten Decodern, welche jeweils mittels eines steckbaren Bauelementes, z.B. in Form einer Steckkarte zur Speicherung der Rufnummernkennungen, betätigbare Bedienelemente aufweisen, wird erreicht, daß die persönliche Rufnummernkennung manipulationssicher nur einem einzigen Fernsprechapparat zugeordnet werden kann. Dies erfolgt durch Einstecken der Steckkarte in die Bedieneinheit des dem jeweiligen Fernsprechapparat zugeordneten Decoders. Eine Umlegung der Rufnummernkennung auf einen anderen Fernsprechapparat erfordert nur das Herausziehen der Steckkarte aus dem Decoder des einen Fernsprechapparates und das Hineinstecken der Steckkarte in den Decoder des gewünschten anderen Fernsprechapparates. Ein solches steckbares Bauelement, z.B. in Form der Steckkarte, wird vom Benutzer in gleicher Weise gut aufbewahrt wie die herkömmliche Bank-Scheckkarte.

Darüber hinaus ist die erfindungsgemäße Fernsprechanlage technisch einfach in ihrem Aufbau, da der die Steuereinrichtung bildende Multiplexer beim Anwählen einer Rufnummer nur das deren Rufnummernkennung zugeordnete Codesignal an alle Decoder aussenden muß, woraufhin der mit dem Codesignal steuerbare Decoder ein Erkennungssignal zurücksendet, so daß die zugehörige Telefon-Anschlußleitung definiert ist und zum Aufbau der gewünschten Verbindung zu dem mit dem Decoder versehen Fernsprechapparat geschaltet werden kann.

Weitere vorteilhafte Ausgestaltungen der Erfindung ergeben sich aus den Unteransprüchen.

Die Erfindung ist nachfolgend anhand einer Prinzipschaltung der erfindungsgemäßen Fernsprechanlage, insbesondere Nebenstellenanlage, näher erläutert.

Die Fernsprechanlage, insbesondere Nebenstellenanlage, besteht aus einer zentralen Vermittlunsanlage 1, einer als Multiplexer 2 ausgebildeten Steuereinrichtung, die der zentralen Vermittlungsanlage 1 zugeordnet ist, und aus einer Vielzahl von über Teilnehmeranschlußleitungen 3 mit der Vermittlungsanlage 1 über den Multiplexer 2 verbundenen Fernsprechapparaten 4. Diesen sind Decoder 5 zugeordnet, weche zwischen die Anschlußdose 6 und den Anschlußkontakt 7 des jeweiligen Fernsprechapparates 4 geschaltet sind. Bei mobilen Fernsprechapparaten 4′ ist der Decoder 5 zwischen die Sender-/Empfängergeräte 8 und den Fernsprechapparat 4′ eingeschaltet.

Jeder Decoder 5 eines jeden Fernsprechapparates 4 ist mittels eines Codesignales als Rufnummernerkennung ansteuerbar. Zur Betätigung des Decoders 5 ist diesem ein Bedienteil für ein steckbares Bauelement, z.B. in Form einer Steckkarte, zur Speicherung der Rufnummernkennung zugeordnet.

Beim Anwählen einer Rufnummer eines bestimmten Fernsprechapparates 4, 4′ sendet der Multiplexer 2 ein der Rufnummer bzw. deren Rufnummernkennung zugeordnetes Codesignal an alle Decoder 5 aus, wobei der mit dem Codesignal angesteuerte Decoder 5 ein Erkennungssignal an den Multiplexer 2 zurücksendet, um so die zugehörige Telefon-Anschlußleitung 3 zu definieren. Diese wird dann zum Aufbau der gewünschten Verbindung zwischen der betroffenen Amtsleitung 9 und dem gewünschten Fernsprechapparat 4, 4′ geschaltet, welchem die angewählte Rufnummer fest zugeordnet ist.

Der Multiplexer 2 bildet eine der zentralen, analogen oder digitalen Vermittlungsanlage 1 nachgeordnete Steuereinheit. Die Eingangsseite des Multiplexers 2 ist mit der Ausgangsseite der Vermittlungsanlage 1 bzw. mit deren Verteilereinrichtung verbunden. Die Anzahl der Verbindungsleitungen 10 zwischen der Ausgangsseite der Vermittlungsanlage 1 bzw. deren Verteilereinrichtung und der Eingangsseite des Multiplexers 2 ist identisch. Desgleichen ist die Anzahl der abgehenden Teilnehmeranschlußleitungen 3 zu den Fernsprechapparaten 4 als Teilnehmerendgeräte gleich der Anzahl der genannten Verbindungsleitungen 10.

Wenn durch die Vermittlungsanlage 1 eine Verbindung zu einem Teilnehmerendgerät (Fernsprechapparat 4) aufgebaut werden soll, so wird der Verbindungsaufbau im Multiplexer 2 zunächst in Wartestellung gehalten. Der Multiplexer sendet ein der Rufnummer zugeordnetes, codiertes Suchsignal in Richtung aller Teilnehmerendgeräte aus, welches auf bestehende Verbindungen keinen Einfluß hat. Dies kann je nach Größe der Vermittlungsanlage 1 auf verschiedene Weise erfolgen:

1. durch paralleles Senden:
Das codierte Suchsignal wird zeitgleich und parallel in Richtung aller Teilnehmerendgeräte gesendet.

2. durch serielles Senden:
Das codierte Suchsignal wird zeitversetzt und nacheinander jeweils in Richtung eines Teilnehmerendgerätes gesendet.

3. durch sequentielles Senden:
Das codierte Suchsignal wird zeitversetzt und parallel in Richtung einer bestimmbaren Gruppe von Teilnehmerendgeräten gesendet, wobei zu jeder Gruppe parallel gesendet wird.

Der Sendevorgang wird noch nicht unterbrochen, wenn vom Decoder des gesuchten Teilnehmerendgerätes ein vom Multiplexer 2 kommendes codiertes Erkennungssignal empfangen wird, sondern so lange fortgesetzt, bis sämtliche Decoder 5 aller Teilnehmerendgeräte abgefragt wurden, da möglicherweise mehrere Teilnehmerendgeräte mit der gleichen Rufnummer parallel ausgestattet sind.

Der Multiplexer 2 identifiziert die entsprechende Teilnehmeranschlußleitung 3 bzw. die entsprechenden Teilnehmeranschlußleitungen 3 zum Teilnehmerendgerät und setzt den in Wartestellung befindlichen Verbindungsaufbau fort, sofern nicht bereits eine Verbindung besteht. In diesem Falle wird das "Besetzt-Zeichen" an den Rufenden gegeben, auch wenn bei parallel geschalteten Teilnehmerendgeräten nur eines in einer aktiven Verbindung steht.

Der Decoder 5 ist eine jedem Teilnehmerendgerät vorgeschaltete, dezentrale Steuereinheit. Die Eingangsseite des Decoders 5 ist mit dem Multiplexer 2 über die Teilnehmeranschlußleitungen 3 des Teilnehmerleitungsnetzes, und die Ausgangsseite des Decoders 5 ist mit dem Teilnehmerendgerät verbunden. Der Decoder 5 empfängt ein vom Multiplexer 2 ausgesandtes codiertes Suchsignal. Stimmt das codierte Suchsignal mit der der Rufnummer entsprechenden Codierung des Decoders 5 überein, so sendet dieser ein Erkennungssignal an den Multiplexer 2 zum Aufbau der Verbindung.

Die Codierung des Decoders 5 ist aktiv, wenn ein oder mehrere einer Rufnummer oder mehreren Rufnummern zugeordnete Steckmodule kurzzeitig in entsprechende Aufnahmen gesteckt werden. Um unbefugte Benutzung des Steckmodules zu verhindern, kann die Codierung des Decoders 5 zusätzlich mit der Eingabe einer persönlichen Geheimnummer über eine Eingabevorrichtung am Decoder 5 bzw. über die Eingabevorrichtung des Teilnehmerendgerätes verbunden werden. Die Codierung bleibt so lange aufrecht erhalten, bis das Steckmodul in einen anderen Decoder 5 eingesteckt wird.

Das Steckmodul ist ein personenbezogenes, mobiles Element, dem z.B. über einen Magnetstreifen eine persönliche Rufnummer und eine Rufnummercodierung zugeordnet ist. Als ein Ausführungsbeispiel ist das Steckmodul entsprechend einer Bank-Scheckkarte mit Magnetstreifen gestaltet. Diese dient gleichzeitig beispielsweise als Firmenausweis. Der Magnetstreifen könnte z.B. auch als Türöffner für geschützte Arbeitsbereiche und zum Abbuchen von firmeninternen Zahlungsvorgängen (z.B. Kantine) dienen.

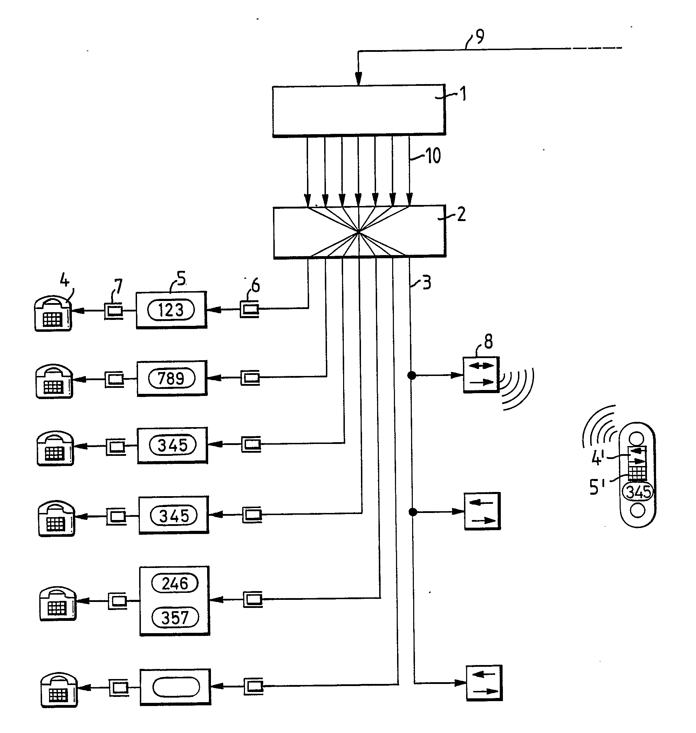

## Ansprüche

1. Fernsprechanlage, insbesondere Nebenstellenanlage, aus einer zentralen Vermittlungsanlage, aus einer dieser zugeordneten Steuereinrichtung und aus einer Vielzahl von über Teilnehmeranschlußleitungen mit der Vermittlungsanlage verbundenen Fernsprechapparaten, denen zusätzlich zur fest vorgegebenen Rufnummer noch besondere, von der Steuereinrichtung ansteuerbare Rufnummenkennungen zuordenbar sind,
**dadurch gekennzeichnet,**
daß jedem Fernsprechapparat (4, 4') ein mit einem Codesignal als Rufnummernkennung ansteuerbarer Decoder (5) zugeordnet ist, der eine mittels eines steckbaren Bauelementes, z.B. in Form einer Steckkarte zur Speicherung der Rufnummernkennung, betätigbares Bedienelement aufweist,
daß die Steuereinrichtung als Multiplexer (2) ausgebildet ist und
daß der Multiplexer (2) beim Anwählen einer Rufnummer das deren Rufnummernkennung zugeordnete Codesignal an alle Decoder (5) aussendet und der mit dem Codesignal ansteuerbare Decoder (5) ein Erkennungssignal zurücksendet, so daß die zugehörige Telefonanschlußleitung (3) definiert ist und zum Aufbau der gewünschten Verbindung geschaltet werden kann.

2. Fernsprechanlage nach Anspruch 1,
**dadurch gekennzeichnet,**
daß der Decoder (5) zwischen die Anschlußdose (6) und den Anschlußkontakt (7) des Fernsprechapparates (4) geschaltet ist.

3. Fernsprechanlage nach Anspruch 1,
**dadurch gekennzeichnet,**
daß der Decoder (5) bei mobilen Fernsprechapparaten (4') zwischen die Sende-/Empfangsgeräte (8)
und den Fernsprechapparat (4') eingeschaltet ist.